# EUROPEAN PATENT APPLICATION

(11) **EP 4 195 230 A1**
(43) Date of publication of application: **14.06.2023**
(21) Application number: 21213837.4
(22) Date of filing: 10.12.2021
(51) Int. Cl.: H01H 33/59, H01H 50/54, H02H 3/08

(54) **COMPACT CONTACTOR**

(71) Applicant: ABB SCHWEIZ AG, 5400 Baden (CH)
(72) Inventor: ZHANG, Zichi, 723 56 Västerås (SE); VALDEMARSSON, Stefan, 531 98 Lidköping (SE); MANNEKUTLA, James, 724 71 Västerås (SE)
(74) Representative: Kransell & Wennborg KB

(57) **Abstract**

A DC contactor (10) operating with voltages of 2 - 3 kV and currents of 0.2 - 0.5 kA comprises a current interrupting section (12) having at least one stationary contact element (18, 20) and a moveable contact element (22) that is moveable from a first position in which a first contact end (26) is in contact with a corresponding contact end (24) of a first stationary contact element (18) and a second position in which the first contact end (26) is placed at a distance D from the corresponding contact end (24), and a current injecting section (14) that generates a sequence of current pulses causing a zero crossing in an arc (A) of a current through the current interrupting section (12) during movement of the moveable contact element (22) from the first to the second position, wherein the distance D is inversely proportional to the rated current of the contactor.

## Description

### FIELD OF INVENTION

The present invention generally relates to a contactor operating at voltages in the range of 2 - 3 kV and currents in the range of 0.2 - 0.5 kA.

### BACKGROUND

With the fast increase of renewable energy and battery storage systems there is potentially a need for a direct current, DC, contactor, with rated voltage in the range of 2-3 kV, and a rated current of a few hundreds of Amperes.

Most DC switching devices cannot break currents at voltages higher than 1500V. Above these levels typically contactors with arc chutes or splitter plates will be needed. The size and cost of contactors increase dramatically once rated voltage is above 1500 V, because more splitter plates are needed to generate higher arc voltage. Consequently, the stroke of movable contact increase as well. Moreover, it is difficult to ensure that an arc enters all gaps of splitter plates. Several extra parts such as blow out coil or permanent magnets might thereby be needed.

One type of existing high-voltage, high-current contactor is disclosed in US 10002722.

In the contactor described therein a current injection section is used to generate current pulses that increase in size and that are injected into a main current path of a current interrupting section in order to introduce a current zero-crossing in the current of the main current path. The contactor also comprises an arc extinguisher, for instance in the form of a number of arc chutes or arc runners.

The contactor is promising for use with these lower current levels.

However, it would be of interest to improve on the structure, such as to make it more compact because in such renewable energy and battery storage systems, the space provided for switching devices may be low.

The present invention is therefore directed towards providing an improved contactor.

### SUMMARY OF THE INVENTION

One object of the present invention is to provide a contactor that can be made in a compact fashion.

This object is according to the present invention obtained through a direct current, DC, contactor operating in a voltage range of 2 - 3 kV and with currents having current levels in the range of 0.2 - 0.5 kA, the contactor comprising:
a current interrupting section having a moveable contact element and at least one stationary contact element, where the moveable contact element is moveable from a first position in which a first contact end is in contact with a corresponding contact end of a first stationary contact element and
a second position in which the first contact end is placed at a distance D from the corresponding contact end of the first stationary contact element, and
a current injecting section configured to generate a first sequence of current pulses with increasing current levels causing a zero crossing in an arc of a current through the current interrupting section during movement of the moveable contact element from the first to the second position, wherein the distance is inversely proportional to the rated current of the contactor.

The distance D may be in the range of 0.8 - 3 mm and may with advantage be 1.0 mm. The distance D may more particularly be set according to D = k/RC, where D is the distance in mm, RC is the rated current in kA and k is a constant having a value in the range of 0.16 - 1.0 kA • mm and with advantage in the range of 0.50 - 0.75 kA • mm.

The current injecting section maybe configured to cause a zero crossing before the second position is reached.

The speed with which the moveable contact element 22 is moved may with advantage be in the range of 0.4 - 0.6 m/s.

The pulses of the first sequence may have a pulse repetition period. The pulse repetition period maybe in the range of 0.15 - 0.31 ms. The moveable contact element may have a speed with which it is moved that is in the range 1.3 - 4.0 times the pulse repetition period and with advantage in the range of 2.0 - 3.3 times the pulse repetition period.

The pulses of the first sequence may additionally or instead have a pulse separation time. The pulse separation time maybe in the range 0.13 - 0.27 ms. The moveable contact element may have a speed with which it is moved that is in the range 1.5- 4.6 times the pulse separation time and with advantage in the range of 2.3 - 3.8 times the pulse separation time.

The current injecting section may additionally be configured to cause a zero crossing within a range of 2 - 5 pulses of the first sequence.

The contactor may furthermore have a control unit that controls the operation of the current injecting section and possibly also the movement of the moveable contact element of the current interrupting section.

Furthermore, there is a single path for the arc between the first stationary contact element and the moveable contact element. Thereby there are no arc separating elements, such as arc horns, arc chutes or arc runners in the current interrupting section.

It is additionally possible that the current interrupting section comprises a second stationary contact element. In this case it is possible that a second contact end of the moveable contact element is in contact with a corresponding contact end of the second stationary contact element in the first position and placed at the distance D from the corresponding contact end of the second stationary contact element in the second position.

It is additionally possible that the current interrupting section comprises a conductive plate for splitting the arc between the first stationary contact element and the moveable contact element. The conductive plate may be placed along a movement path of moveable contact element between the first and the second position. The conductive plate may more particularly be placed half-way along the path between the first and the second position. The conductive plate may be of a ferro-material.

The current injection section may at one end be connected to the first stationary contact element and at the other to the moveable contact element. As an alternative the current injection section may at one end be connected to the first stationary contact element and at the other to the second stationary contact element.

The contactor may be provided in a renewable energy and/or battery storage system.

The present invention has a number of advantages. It provides a contactor that can be realized without arc separating elements, such as arc horns, arc chutes or arc runners. Thereby the contactor can be made compact and at low cost.

### BRIEF DESCRIPTION OF THE DRAWINGS

The present invention will in the following be described with reference being made to the accompanying drawings, where
fig. 1 schematically shows a contactor comprising a current interrupting section together with a current injecting section,
fig. 2 schematically shows a first embodiment of the contactor,
fig. 3 schematically shows a first sequence of current pulses generated by the current injecting section together with a load current through the current interrupting section that is to be interrupted,
fig. 4 shows a current interrupting section for a contactor according to a second embodiment, and
fig. 5 - 7 show alternative realizations of the current injecting section.

### DETAILED DESCRIPTION OF THE INVENTION

The present invention concerns a contactor, which may be provided in various types of electric equipment such as switchgears, circuit breakers etc. The contactor may more particularly be employed in high voltage applications in direct current (DC) systems. In high voltage applications then for instance applications of 2 - 3 kV are contemplated. The current levels that are contemplated are on the other hands lower and in the range of 0.2 - 0.5 kA. These voltage and current ranges maybe of interest in renewable energy and/or battery storage systems.

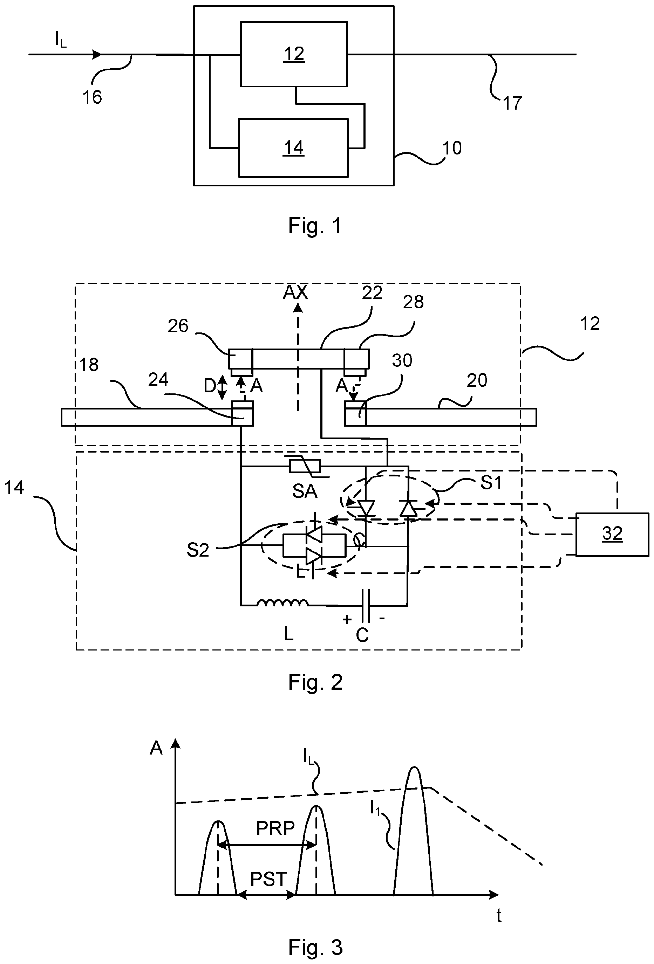

Fig. 1 schematically shows a contactor 10 for such a voltage and current range connected between a first and a second conductor 16 and 17. The contactor 10 comprises a current interrupting section 12 and a current injecting section 14. The current interrupting section 12 has two ends, each connected to a corresponding conductor 16 and 17. A current injecting section 14 is connected between the first conductor 16 and the current interrupting section 12. The purpose of the current injecting section 14 is to inject at least a first sequence of current pulses in an opposite direction to a load current I_{L} that runs in the conductors 16 and 17, which load current is a DC current.

Fig. 2 schematically shows a first embodiment of the contactor 10 in some more detail

The current interrupting section 12 comprises a moveable contact element 22, a first stationary contact element 18 and a second stationary contact element 20, where the moveable contact element 22 is provided for contacting the first stationary contact element 18 and the second stationary contact element 20. The first stationary contact element 18 may be connected to the first conductor 16 and the second stationary contact element 20 may be connected to the second conductor 17. The moveable contact element 22 is a mechanical bridging element and is furthermore moveable along an axis AX in order to make or break a galvanic contact between itself and the first and second stationary contact elements 18 and 20. The axis AX is essentially perpendicular to a common plane in which the first and second stationary contact elements 18 and 20 are provided. Thereby the moveable contact element 22 is moveable along a movement path along the axis AX, which path is perpendicular to the common plane. The moveable contact element 22 furthermore has a first contact end 26 for making contact with a corresponding contact end 24 of the first stationary contact element 18 and a second contact end 28 for making contact with a corresponding contact end 30 of the second stationary contact element 20. The contact ends 24, 26, 28 and 30 of the moveable contact element 22 and the first and second stationary contact elements 18 and 20 are in this example provided with contact pads for obtaining galvanic contact between each other. However, it should be realized that such pads are optional.

There are no arc separating elements in the current interrupting section, such as arc chutes, arc horns or arc runners. The current interrupting section and consequently also the whole contactor can thereby be made in a compact way.

The contactor 10 may initially be closed in that the moveable contact element 22 is in a first position in which the first contact end 26 of the moveable contact element 22 is in contact with the corresponding contact end 24 of the first stationary contact element 18 and the second contact end 28 of the moveable contact element 22 is in contact with the corresponding contact end 30 of the second stationary contact element 20.

The contactor 10 may thereafter be opened. This may be done through moving the moveable contact element 22 along the movement path to a second position. In this second position, the first contact end 26 of the moveable contact element 22 is placed at a distance D from the corresponding contact end 24 of the first stationary contact element 24 and the second contact end 26 of the moveable contact element 22 is placed at the distance D from the corresponding contact end 30 of the second stationary contact element 30.

The opening also creates an arc A between the first stationary contact element 18 and the moveable contact element 22 as well as between the moveable contact element 22 and the second stationary contact element 20. As there are no arc chutes, arc runners or arc horns, there is a single path for the arc A between the first stationary contact element 18 and the moveable contact element 22 as well as between the moveable contact element 22 and the second stationary contact element 20.

The distance D may with advantage be in the range of 0.8 - 3 mm and may with advantage be 1.0 mm. The distance D may additionally be inversely proportional to the rated current of the contactor, which may be the rated level of the current through the current interrupting section. The distance D may more particularly be set according to D = k/RC, where D is the distance, RC is the rated current and k is a constant having a value in the range of 0.16 - 1.0 kA • mm and with advantage in the range of 0.5 - 0.75 kA • mm. The rated current may be a current in the previously mentioned interval of 0. - 0.5 kA.

In DC systems, there are no naturally occurring zero crossings in the current. The current injecting section 14 is provided for the injection of opposing currents into the contactor for obtaining these current zero crossings.

The purpose of the current injecting section 14 is thus to cause a zero crossing in the arc A of the load current I_{L} running through the current interrupting section. The purpose is thus to obtain such a current zero crossing enabling the extinguishing of the arc A occurring when the moveable contact element 22 is opened thereby interrupting the load current.

The current injection section is at one end connected to the first stationary contact element 18 and at the other end connected to the moveable contact element 22.

The current injecting section 14 comprises a surge arrester SA connected between the first static contact element 18 and the moveable contact element 22 of the current interrupting section 12. A first switch S1 is additionally connected between the moveable contact element 22 and a first end of a resonance branch, where a second end of the resonance branch is connected to the first stationary contact element 18, which resonance branch comprises a capacitor C connected in series with an inductor L. There is also a second switch S2 connected in parallel with the resonance branch. The first and second switches S1 and S2 are in the example realized as a pair of anti-parallel thyristors. It should however be realized that other realizations are possible such as anti-parallel Triacs.

There is also a control unit 32 controlling the first and second switches S1 and S2. It is also possible that this control unit 32 controls the movement of the moveable contact element 22. Thereby the control unit 32 controls the operation of the current injecting section 14 and possibly also the movement of the moveable contact element 22 of the current interrupting section 12.

The speed with which opening of the moveable contact element 22 is made may with advantage be in the range of 0.4 - 0.6 m/s.

The operation of the above-described current injection section 14 is the following with reference also being made to fig. 3, which schematically shows the generation of the first sequence of current pulses I₁ together with the load current I_{L}.

Once an arc voltage between the movable contact element 22 and the stationary contact elements 18 and 20 of the current interrupting section 12 is detected because the moveable contact element 22 starts to move from the first to the second position, the first switch S1 is turned on after an appropriate time delay. Then the resonant capacitor C is charged by the arc voltage and an injection current I₁ of opposite direction flows through the current interrupting section 12. The first switch S1 will be switched off automatically once the injection current I₁ is equal to zero. The voltage of resonant capacitor C may be a fraction of the arc voltage. Then there will be a time delay which is larger than the turn-off time of the first switch S1. Hereafter, a second switch S2 is turned on to let the resonant capacitor C discharge. The capacitor C changes polarity at the end of this discharge period and the voltage amplitude of capacitor C is retained. After another time delay, the first switch S1 is turned on again. This time the voltage differential between C and the arc A is increased. Consequently, the injection current I₁ increases as well. By repeating this process (firing S1 then S2), a first sequence or series of resonant injection current pulses I₁ are provided that is super-imposed on the load current I_{L} running through the current interrupting section 12. When the injection current I₁ reaches the same amplitude as the load current I_{L}, then the total current through the current interrupting section 12 drops to zero and the arc A is interrupted successfully. The load current turns to charge the resonant capacitor C, the voltage across contacts rises up until it reaches a protective voltage level of the surge arrester SA, then the load current commutates to the surge arrester SA and reaches zero after a while.

The arc might re-ignite in the case that the transient recovery voltage between contacts is larger than the gap withstand voltage. Then switch S2 should be turned on again to discharge the resonant capacitor C. This process (turning on S1 then S2) continues until the current is finally interrupted.

It can thereby be seen that the current injecting section 14 generates the first sequence of current pulses I₁ with increasing current levels causing a zero crossing in the arc A of the load current I_{L} through the current interrupting section 12 during movement of the moveable contact element 22 from the first to the second position, where additionally the zero-crossing is obtained before the second position is reached.

After the current has been interrupted through the obtained zero-crossing, it is then possible to continue moving the moveable contact element 22 to a third position placing the first and second contact ends 26 and 28 at a higher distance from the corresponding contact ends 24 and 30 of the first and the second stationary contact elements 18 and 20, where the third distance may as an example be 20 mm.

The current injecting section 14 may be configured to generate pulses in the first sequency of pulses with a certain pulse repetition period PRP and/or pulse separation time PST. The pulse repetition period PRP may be in the range of 0.15 - 0.31 ms, while the pulse separation time PST may be in the range 0.22 - 0.27 ms. The speed with which the moveable contact element is moved may more particularly be in the range of 1.3 - 4.0 times the pulse repetition period PRP and with advantage in the range of 2.0-3.3 times the pulse repetition period PRP. The speed with which the moveable contact element is opened may additionally or instead be in the range 1.5 - 4.6 times the pulse separation time PST and with advantage in the range 2.3 - 3.8 times the pulse separation time PST.

The pulse width is typically defined by the values of the capacitor C and inductor L. The pulse repetition period PRP is in turn set through a switch control scheme used to turn on the switches S1 and S2. The pulse width and pulse repetition period PRP may then be used to define the pulse separation time PRP.

It is additionally possible that the values of the components of the resonance branch are selected so that a zero crossing is obtained within a range of 2 - 5 pulses of the first sequence.

With the above-mentioned relationships of the current injecting section 14 to the opening speed, a slow opening of the moveable contact element is obtained in relation to the quenching of the arc.

Through the dimensioning with a small gap and a slow speed with which the opening takes place, it is possible to avoid the use of arc chutes, arc horns or arc runners for separating the arc A into subarcs. Thereby the contactor can be made compact and at low cost.

By controlling the opening speed so that a small gap between the movable and stationary contact elements is maintained during the breaking time (for instance low opening speeds) the gap can withstand high recovery voltage (dU/dt). Thereby the capacitance C can also be chosen small.

A capacitor with low nominal voltage "U" can be used as it is charged for only milliseconds during breaking operation (compare life expectancy for film capacitors) Also a capacitor with low capacitance "C" can be used as the breaking is taking place in a narrow gap between the movable and stationary contact elements.

Through connecting the current injecting section to the moveable contact element, the movable contact element is made into a disconnector for the current injecting section, which is advantageous for avoiding leakage currents in the switches. However, it should be realized that the current injecting section can be connected to the second stationary contact element instead, which would effectively connect the current injecting section in parallel with the current interrupting section.

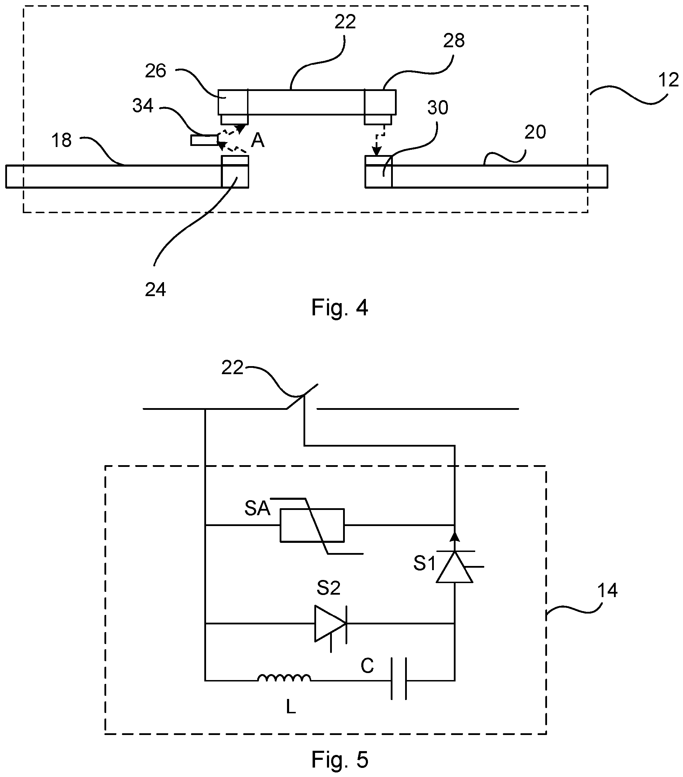

It is possible to increase the current breaking level. One way in which this can be done according to a second embodiment is shown in fig. 4, which shows a variation of the current interrupting section 12. The contactor is essentially the same as in fig. 2. However, in this embodiment there is a conductive plate 34, which may be of a ferro-material. The conductive plate 34 is provided in the current interrupting section 14 for splitting the arc A between the first stationary contact element 18 and the moveable contact element 22. The conductive plate 34 is more particularly placed along the movement path of the moveable contact element 20 between the first and the second position and with advantage half-way along the path between the first and the second position. This doubles the arc voltage and thereby also the current breaking level is increased.

It is not necessary to use anti-parallel thyristor or Triacs in the current injecting section. Fig. 5 shows an example where each switch only comprises one thyristor, where the thyristor of the first switch S1 has a direction of conductivity towards the moveable contact element 22 and the thyristor of the second switch S2 has a direction of conductivity towards the first switch S1.

The circuit in fig. 5 operates for unidirectional load currents.

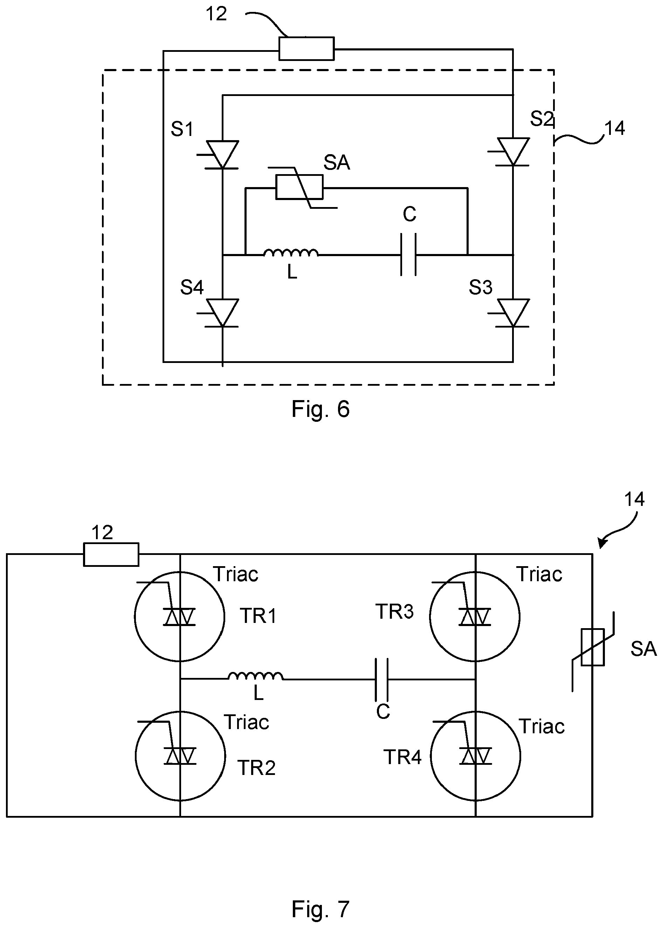

There are a number of possible further variations of the current injecting section, where one is shown in fig. 6 and another in fig. 7.

In fig. 6 the switches are realized as thyristors. In the current injecting section 16, the surge arrester SA is connected in parallel with the resonance branch comprising the capacitor C connected in series with the inductor L. Moreover, the second switch S2 is in this case connected between the second stationary contact element of the current interrupting section 12 and a first end of the parallel circuit, while the first switchSi is connected between the same second stationary contact element and a second end of the parallel circuit. Moreover, a third switch S₃ is connected between the first end of the parallel circuit and the first stationary contact element of the current interrupting section 12, while a fourth switch S₄ is connected between the second end of the parallel circuit and the first stationary contact element of the current interrupting section 12. In fig. 6 the thyristor of the second switch S2 has a direction of conductivity towards the first end of the parallel circuit while the thyristor of the first switch S1 has a direction of conductivity towards the second end of the parallel circuit. The directions of conductivity of the thyristors of the third and fourth switches S₃ and S₄ are both towards the first stationary contact element end of the current interrupting section 12.

When operating the current injecting section 14, first thyristors of the switches S1 and S₃ are fired to charge the resonant capacitor C. Then thyristors of the switches S2 and S₄ are fired to discharge the resonant capacitor C, both charging and discharging current flow through the moveable contact element, therefore the total current zero crossing is reached faster and even if arc re-ignition occurs, a new current zero crossing is reached faster as well.

Another alternative solution is shown in fig. 7. In this case there is resonance branch comprising a series-circuit of inductor L and capacitor C, where a first thyristor unit or first triac TR1 is connected between a first end of the series-circuit and the second stationary contact element of the current interrupting section 12 and a second thyristor unit or second triac TR2 is connected between the first end of the series-circuit and the first stationary contact element of the current interrupting section 12. There is also a third thyristor unit or third triac TR₃ connected between a second end of the series-circuit and the second stationary contact element of the current interrupting section 12 and a fourth thyristor unit or fourth triac TR2 connected between the second end of the series-circuit and the first stationary contact element of the current interrupting section 12. The surge arrester SA is finally connected between the first and second stationary contact elements of the current interrupting section 12.

The current injection section 14 of fig. 7 is also a bi-directional circuit with fast current interruption, as all current pulses through the resonance branch are current injections. It is much faster in reaching the total current zero crossing than the previously mentioned circuits. However, this alternative circuit doubles the number of thyristors, since each thyristor unit comprises a triac or two anti-parallel thyristors.

Above were given a few examples of current injecting sections for injecting currents that achieve current zero crossings. It should be realized that these are merely a few examples of sections that may be used for introducing current zero crossings.

Moreover, the contactor was a two-pole contactor. It should be realized that it is also possible to use a one-pole contactor instead.

From the foregoing discussion it is evident that the present invention can be varied in a multitude of ways. It shall consequently be realized that the present invention is only to be limited by the following claims.

## Claims

1. A direct current, DC, contactor (10) operating in a voltage range of 2 - 3 kV and with currents having current levels in the range of 0.2-0.5 kA, the contactor (10) comprising
a current interrupting section (12) having a moveable contact element (22) and at least one stationary contact element (18, 20), where the moveable contact element (22) is moveable from a first position in which a first contact end (26) is in contact with a corresponding contact end (24) of a first stationary contact element (18) and a second position in which the first contact end (26) is placed at a distance D from the corresponding contact end (24) of the first stationary contact element (24), and
a current injecting section (14) configured to generate a first sequence of current pulses (I₁) with increasing current levels causing a zero crossing in an arc (A) of a current (I_{L}) through the current interrupting section (12) during movement of the moveable contact element (22) from the first to the second position, wherein the distance D is is inversely proportional to the rated current of the contactor.

2. The contactor (10) according to any previous claims, wherein the current injecting section (14) is configured to cause a zero crossing before the second position is reached.

3. The contactor (10) according to claim 1 or 2, wherein the distance D is set according to D = k/RC, where D is the distance in mm, RC is the rated current in kA and k is a constant having a value in the range of 0.16 - 1.0 kA • mm.

4. The contactor (10) according to any previous claim, wherein the pulses of the first sequence have a pulse repetition period (PRP) and the moveable contact element has a speed with which it is moved that is in the range 1.3 - 4.0 times the pulse repetition period (PRP).

5. The contactor (10) according to any previous claim, wherein the pulses of the first sequence have a pulse separation time (PST) and the moveable contact element has a speed with which it is opened that is in the range 1.5- 4.6 times the pulse separation time (PST).

6. The contactor (10) according to any previous claim, wherein the current injecting section (14) is configured to cause a zero crossing within a range of 2 - 5 pulses of the first sequence.

7. The contactor (10) according to any previous claim, wherein the current interrupting section (12) comprises a second stationary contact element (20).

8. The contactor (10) according to claim 7, wherein a second contact end (28) of the moveable contact element (22) is in contact with a corresponding contact end (30) of the second stationary contact element (20) in the first position and placed at the distance D from the corresponding contact end (30) of the second stationary contact element (20) in the second position.

9. The contactor (10) according to any previous claim, wherein there is a single path for the arc between the first stationary contact element (18) and the moveable contact element (22).

10. The contactor (10) according to any previous claim, wherein there are no arc separating elements in the current interrupting section (12).

11. The contactor (10) according to any previous claim, wherein the current interrupting section (12) comprises a conductive plate (34) for splitting the arc (A) between the first stationary contact element (18) and the moveable contact element (22).

12. The contactor (10) according to claim 11, wherein the conductive plate (34) is placed along a movement path of moveable contact element (20) between the first and the second position.

13. The contactor (10), according to claim 12, wherein the conductive plate (34) is placed half-way along the path between the first and the second position.

14. The contactor (10) according to any of claims 11 - 13, wherein the conductive plate (34) is of a ferro-material.

15. The contactor (10) according to any previous claim, wherein the current injection section (14) is at one end connected to the first stationary contact element (18) and at the other connected to the moveable contact element (22).
